# DEMANDE DE BREVET EUROPEEN

(11) **EP 3 633 645 A1**
(43) Date de publication de la demande: **08.04.2020**
(21) Numéro de dépôt: 19201544.4
(22) Date de dépôt: 04.10.2019
(51) Int. Cl.: G08B 25/00, G08B 25/12, B66B 5/00, H04L 29/06

(54) **SYSTEME POUR DONNER L'ALERTE ENTRE UN ASCENSEUR ET UN POSTE CENTRAL**

(30) Priorité: 04.10.2018 FR 1871125
(71) Demandeur: Amphitech, 75011 Paris (FR)
(72) Inventeur: Maingret, Xavier, 94420 Le Plessis Trévise (FR)
(74) Mandataire: Eidelsberg, Olivier Nathan

(57) **Abrégé**

L'invention concerne un système pour donner l'alerte, comportant au moins un central de réception des alertes et au moins un poste susceptible de déclencher une alerte, le au moins un poste susceptible de déclencher une alerte et le au moins un central étant reliés par un réseau de communication, par exemple l'internet, un réseau de téléphonie fixe ou mobile ou analogues, caractérisé en ce que, par action sur le bouton d'appel d'un dispositif boîtier se trouvant dans le poste susceptible d'émettre une alerte, il est prévu des moyens pour générer d'une part un appel du type vocal entre le au moins un poste et le central et d'autre part, un appel dit d'appel de type technique ou de test transmettant directement, de manière indépendante de l'appel vocal, des informations relatives à une anomalie détectée par le système et pouvant ainsi être la cause de l'appel.

## Description

La présente invention se rapporte à un système pour donner l'alerte, comportant au moins un central de réception des alertes et au moins un poste susceptible de déclencher une alerte, le au moins un poste susceptible de déclencher une alerte et le au moins un central étant reliés par un réseau de communication, par exemple l'internet, un réseau de téléphonie fixe ou mobile ou analogues.

Ce genre de système trouve notamment son application dans les ascenseurs, ainsi que dans les portails d'entrée sécurisés, notamment l'entrée des banques, et notamment dans les sas d'entrée de banque. Ce système trouve également son application dans d'autres domaines, tels que...

Classiquement, il est connu d'organiser la communication entre le poste donnant l'alerte et le central recevant l'alerte par l'intermédiaire d'un protocole de communication permettant d'identifier le type de matériel correspondant au poste émettant l'alerte et la raison de l'appel de l'appelant dans le cas de l'émission d'une alerte.

Suivant l'invention, par action sur le bouton d'appel d'un dispositif boîtier se trouvant dans le poste susceptible d'émettre une alerte, il est prévu des moyens pour générer, de préférence simultanément, d'une part un appel du type vocal entre le au moins un poste et le central et d'autre part, un appel dit d'appel de type technique ou de test transmettant directement, de manière indépendante de l'appel vocal, des informations relatives à une anomalie détectée par le système et pouvant ainsi être la cause de l'appel.

Suivant un mode de réalisation préféré de l'invention, les informations relatives à la détection d'une anomalie sont envoyées sous la forme d'une requête SIP INVITE encapsulées dans le protocole SIP.

Suivant un mode de réalisation préféré de l'invention, l'envoi de messages SIP du poste au central ou à un autre contact URI au format P2P en même temps que l'appel vocal est effectué pour les raisons suivantes en combinaison ou prises indépendamment : appui sur le bouton d'appel, défaut de secteur/retour du secteur, panne de bouton d'appel (appui supérieur à une durée donnée, par exemple 10 min, fin de panne de bouton d'appel et appel cyclique de test.

Suivant un mode de réalisation préféré de l'invention, le message est envoyé au format SIP MESSAGE : Text Plain, comportant l'identité sous la forme de 10 chiffres de 0 à 9, ainsi qu'un code produit suivi des codes correspondant aux différents cas d'appels.

Suivant un mode de réalisation préféré de l'invention, le système IP est enregistré sur un IP-PBX et le poste (A) peut envoyer des messages SIP vers le central (B) en même temps que l'appel local vers le central (méthode SIP INVITE), l'ensemble APPELS SIP et MESSAGES SIP étant relayé par l'IP-PBX par l'intermédiaire de l'utilisation de numéros d'extension.

Suivant un mode de réalisation de l'invention, dans le cas où le système IP est enregistré sur un IP-PBX, l'appel de type vocal en mode P2P (appel par adresse IP) d'un contact est possible à partir du moment où l'URI appelé est au format P2P (appel par adresse IP). L'identification du poste (A) vers le poste (C) utilise le procédé suivant l'invention. Un autre produit (C) peut recevoir des messages SIP du poste (A) comme suivant l'invention, si l'extension (B) n'est pas accessible ou si le produit (B) ne peut pas utiliser la réception d'appel en P2P.

A titre d'exemple, on décrit maintenant des modes de réalisation préférés de l'invention en se reportant aux dessins, dans lesquels :
La figure 1 représente les messages reçus lors d'une raison d'appel vocal, technique ou de test cyclique vers un poste central B IP GRANDSTREAM GXV3240;
La figure 2 représente une copie d'écran d'un appel entrant sur un téléphone GXV3240téléphone SIP (poste central B), identification ID + raison de l'appelant du poste A ;
La figure 3 représente des messages SIP reçus sur un poste SIP Grandstream GXV3240, extension B, envoyés par l'extension A et relayés par l'IPBX ; et
La figure 4 représente des messages SIP reçus sur le poste SIP Grandstream GXV3240 Extension B du problème enregistrement IP-PBX de l'extension A. Le poste A envoie le message SIP au central B en utilisant l'adresse IP B.

Suivant un premier mode de réalisation, on réalise l'identification de la raison d'appel dans le Header ou En-tête From en mode Peer to Peer (PTP) :

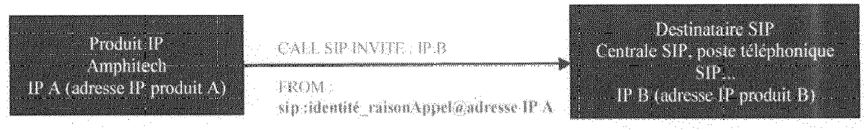

### Raisons d'appels du produit A vers le produit B :

- Bouton Appel.
- Défaut secteur/ retour secteur.
- Panne bouton d'appel (appui supérieur à 10 min) / fin de panne bouton d'appel.
- Appel cyclique de test.

Dans la méthode : SIP INVITE (méthode SIP de l'appelant *produit A* vers appelé *produit B*), on retrouvera dans le **Message Header** : sip :identité_raison Appel@adresseIP
- L'identité : 10 digits (de 0 à 9).
- Raison d'Appel (défaut d'usine) :

| **Valeurs** | **Raison d'appel** | **Type d'appel** |
|---|---|---|
| Bouton_appel | Bouton d'appel | Vocal |
| défautSecteur | Défaut secteur | Technique |
| retourSecteur | Retour secteur | Technique |
| RetourBoutonALB | Retour bouton d'appel | Technique |
| PanneBoutonALP | Panne bouton d'appel | Technique |
| Test | Test cyclique | Test cyclique |

- Adresse IP : adresse IP du produit A (système Amphitech)

Pour les raisons d'appels "bouton d'appel" et "Test cyclique", les **valeurs** sont modifiables par les paramètres de l'application dans :
*EVENEMENTS SYSTEM-> Gestion appels techniques-> Gestion message Techniques P2P-> Bouton d'appel*
*EVENEMENTS SYSTEM-> Gestion appels techniques-> Gestion message Techniques P2P-> Test Cyclique*

Une trace SIP WireShark (espion protocole réseau) avec l'Header From contenant l'ID_raison d'appel@adresse IPA du poste A appelant le poste B est telle que ci-dessous :
INVITE sip:192.168.0.22:5060 SIP/2.0
Via: SIP/2.0/UDP 192.168.0.33:5060;branch=z9hG4bK.FHUOzhRPQ;rport
From: <sip:000000000 bouton appel@192.168.0.33>:tag=pMk4ZOaq∼
To: sip:192.168.0.22
CSeq: 20 INVITE
Call-ID: zBtys-kw∼P
Max-Forwards: 70
Supported: replaces, outbound
Allow: INVITE, ACK, CANCEL, OPTIONS, BYE, REFER, NOTIFY, MESSAGE, SUBSCRIBE, INFO, UPDATE
Content-Type: application/sdp
Content-Length: 434
Contact:
   <sip:000000000 bouton appel@192.168.0.33>;+sip.instance="<urn:uuid:fe4212 34-70b0-4878-ad77-9b840cb681eb>"
User-Agent: Unknown (belle-sip/1.4.2)

v=0
o=000000000_bouton_appel 3528 3742 IN IP4 192.168.0.33
s=Talk
c=IN IP4 192.168.0.33
t=0 0
a=rtcp-xr:rcvr-rtt=all: 10000 stat-summary=loss,dup,jitt,TTL voip-metrics
m=audio 7078 RTP/AVP 0 8 96 97 98 101 99 100
a=rtpmap:96 speex/8000
a=fmtp:96 vbr=on
a=rtpmap:97 speex/16000
a=fmtp:97 vbr=on
a=rtpmap:98 opus/48000
a=rtpmap:101 telephone-event/8000
a=rtpmap:99 telephone-event/16000
a=rtpmap:100 telephone-event/48000

Suivant un autre mode de réalisation, on identifie la raison d'appel dans un message SIP en mode PTP :

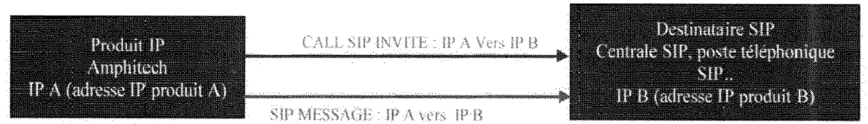

Il est possible de valider l'envoi de messages SIP (du produit A) au même contact ou à un autre contact URI au format P2P, en même temps que l'appel vocal (méthode SIP INVITE) pour les raisons suivantes :
- Bouton Appel.
- Défaut secteur/ retour secteur.
- Panne bouton d'appel (appui supérieur à 10 min) / fin de panne bouton d'appel.
- Appel cyclique de test.
Au format SIP MESSAGE : Text Plain
identity=00000000 ;product=product_code ;alerte=code
• **Identity** : 10 digits (de 0 à 9 avec 00000000 : défaut usine)
• **Product** :

| **Product code** | **Produit** |
|---|---|
| 81 | IP-GAP |

• **Alerte** :

| **Code** | **Produit** |
|---|---|
| 01 | Bouton d'appel |
| 04 | Test cyclique |
| 11 | Retour secteur |
| 12 | Défaut secteur |
| 17 | Panne bouton d'appel |
| 18 | Retour bouton d'appel |

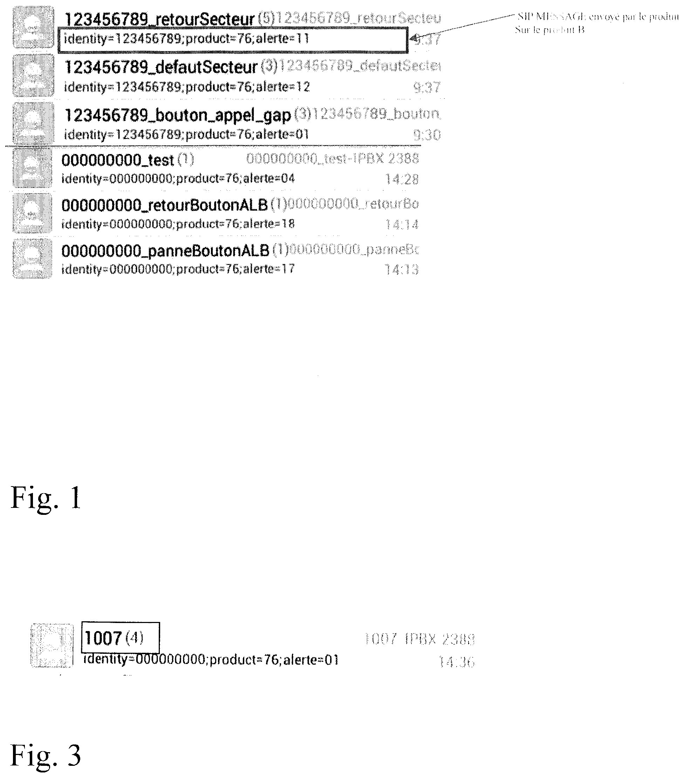

A la figure 1, sont représentés les messages reçus lors d'une raison d'appel vocal, technique ou de test cyclique vers un poste IP GRANDSTREAM GXV3240 (produit B):
L'appelant (produit A) est identifié avec son identité + raison d'appel (voir § 1), ainsi que la réception du message SIP (sur le produit B).

### Exemple 2 :

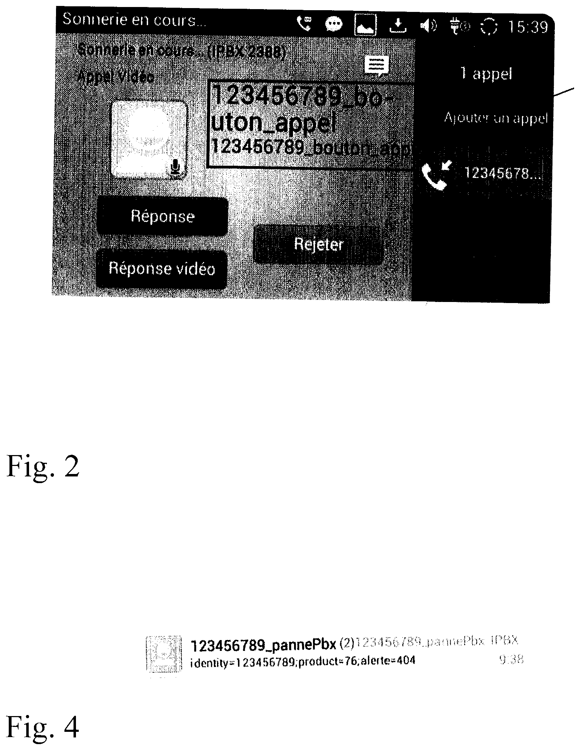

Appel de type vocal du produit B par le produit A suite à l'appui bouton sur le bouton d'appel du produit A
Côté appelé produit B (GXV3240) affichage sur LCD :
A la figure 2, est représentée une copie d'écran d'un appel entrant sur un téléphone GXV3240, identification ID + raison de l'appelant du poste A.

Suivant un autre mode de réalisation, on réalise l'identification de la raison d'appel dans un message SIP et header From en mode IP-PBX :

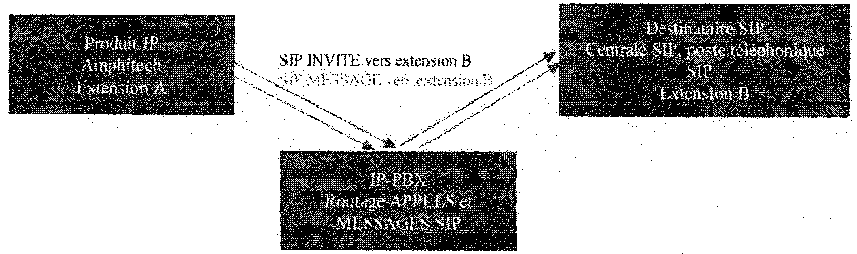

Exemple : appel du GXV3240 par son numéro d'extension B (1000) à partir du numéro d'extension A (1007) du produit SIP Amphitech (info : *l'ensemble utilise un IP-PBX UCM6102*).

A la figure 3, sont représentés des messages SIP reçus sur un poste SIP Grandstream GXV3240, extension B, envoyés par l'extension A et relayés par l'IPBX.

### Raisons d'appels extension A vers l'extension B :

- Bouton Appel.
- Défaut secteur/ retour secteur.
- Problème d'enregistrement vers l'IP-PBX de l'extension A.
- Panne bouton d'appel (appui supérieur à 10 min) / fin de panne bouton d'appel.
- Appel cyclique de test.
Au format SIP MESSAGE : Text Plain
**identity=00000000 ;product=product_code ;alerte=code**
• **Identity** : 10 digits (de 0 à 9 avec 00000000 : défaut usine)
• **Product** :

| **Product code** | **Produit** |
|---|---|
| 81 | IP-GAP |

• **Alerte** :

| **Code** | **Produit** |
|---|---|
| 01 | Bouton d'appel |
| 04 | Test cyclique |
| 11 | Retour secteur |
| 12 | Défaut secteur |
| 17 | Panne bouton d'appel |
| 18 | Retour bouton d'appel |
| 404 | Problème d'enregistrement sur IP-PBX |

Le cas du **code d'alerte** "404" ne peut être utilisé que si le destinataire Extension B peut être joint par son adresse IP B expliqué au § 3.2.

A la figure 4, est représentée l'image reçue sur le poste SIP Grandstream GXV3240 Extension B du problème enregistrement IP-PBX de l'extension A. Le poste A envoie le message SIP au central B en utilisant l'adresse IP B.

Suivant un autre mode de réalisation, on envoie le message Header appelé en mode P2P :
Si le système IP est enregistré sur un IP-PBX, l'appel de type vocal en mode P2P (appel par adresse IP) d'un contact est toujours possible à partir du moment où l'URI appelé est au format P2P (appel par adresse IP). L'identification du produit A vers le produit C utilisera la méthode détaillée au § 1. Un autre produit C peut recevoir des messages SIP du produit A comme détaillé au § 2, si l'extension B n'est pas accessible ou si le produit B ne peut pas utiliser la réception d'appels en P2P.

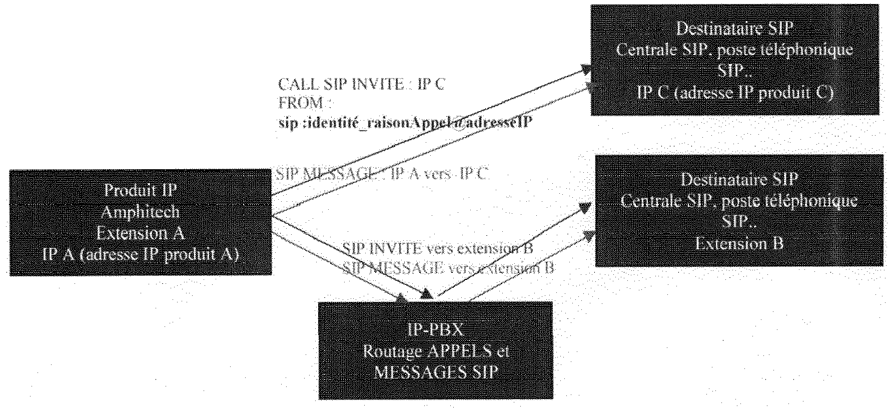

### Envoi de messages SIP du produit A vers le produit C pour les raisons d'appel :

- Bouton Appel.
- Défaut secteur/ retour secteur.
- Panne d'enregistrement vers l'IP-PBX de l'extension A.
- Panne bouton d'appel (appui supérieur à 10 min)/ fin de panne bouton d'appel.
- Appel cyclique de test.

Dans la méthode : **SIP INVITE** on retrouvera dans le **Message Header** :
**sip :identité_raisonAppel@adresseIP**
• L'identité : 10 digits (de 0 à 9).
• Raison Appel (défaut usine) :

| **Valeurs** | **Raison d'appel** | **Type d'appel** |
|---|---|---|
| Bouton_appel | Bouton d'appel | Vocal |
| défautSecteur | Défaut secteur | Technique |
| retourSecteur | Retour secteur | Technique |
| RetourBoutonALB | Retour bouton d'appel | Technique |
| PanneBoutonALP | Panne bouton d'appel | Technique |

| Test | Test cyclique | Test cyclique |
|---|---|---|
| Panne Pbx | Problème d'enregistrement vers IP-PBX | Technique |

• Adresse IP : adresse IP du produit A (Amphitech)

Pour les raisons d'appels "bouton d'appel" et "Test cyclique", les valeurs sont modifiables par les paramètres de l'application dans :
*EVENEMENTS SYSTEM-> Gestion appels techniques-> Gestion message Techniques P2P-> Bouton d'appel*
*EVENEMENTS SYSTEM-> Gestion appels techniques-> Gestion message Techniques P2P-> Test Cyclique* |

## Revendications

1. Système pour donner l'alerte, comportant au moins un central de réception des alertes et au moins un poste susceptible de déclencher une alerte, le au moins un poste susceptible de déclencher une alerte et le au moins un central étant reliés par un réseau de communication, par exemple l'internet, un réseau de téléphonie fixe ou mobile ou analogues, **caractérisé en ce que**, par action sur le bouton d'appel d'un dispositif boîtier se trouvant dans le poste susceptible d'émettre une alerte, il est prévu des moyens pour générer d'une part un appel du type vocal entre le au moins un poste et le central et d'autre part, un appel dit d'appel de type technique ou de test transmettant directement, de manière indépendante de l'appel vocal, des informations relatives à une anomalie détectée par le système et pouvant ainsi être la cause de l'appel.

2. Système suivant la revendication 1, **caractérisé en ce que** l'appel du type vocal et l'appel de type technique sont générés simultanément.

3. Système suivant la revendication 1 ou 2, **caractérisé en ce que** les informations relatives à la détection d'une anomalie sont envoyées sous la forme d'une requête SIP INVITE encapsulées dans le protocole SIP.

4. Système suivant la revendication 1, 2 ou 3, **caractérisé en ce que** l'envoi de messages SIP du poste au central ou à un autre contact URI au format P2P en même temps que l'appel vocal est effectué pour les raisons suivantes en combinaison ou prises indépendamment : appui sur le bouton d'appel, défaut de secteur/retour du secteur, panne de bouton d'appel (appui supérieur à une durée donnée, par exemple 10 min), fin de panne de bouton d'appel et appel cyclique de test.

5. Système suivant l'une des revendications 1 à 4, **caractérisé en ce que** le message est envoyé au format SIP MESSAGE : Text Plain, comportant l'identité sous la forme de 10 chiffres de 0 à 9, ainsi qu'un code produit suivi des codes correspondant aux différents cas d'appels.

6. Système suivant l'une des revendications 1 à 5, **caractérisé en ce que** le système IP est enregistré sur un IP-PBX et le poste (A) peut envoyer des messages SIP vers le central (B) en même temps que l'appel local vers le central (méthode SIP INVITE), l'ensemble APPELS SIP et MESSAGES SIP étant relayé par l'IP-PBX par l'intermédiaire de l'utilisation de numéros d'extension.

7. Système suivant la revendication 6, **caractérisé en ce que** l'appel de type vocal en mode P2P (appel par adresse IP) d'un contact est possible à partir du moment où l'URI appelé est au format P2P (appel par adresse IP). L'identification du poste (A) vers le poste (C) utilise le procédé suivant l'invention. Un autre produit (C) peut recevoir des messages SIP du poste (A) comme suivant l'invention, si l'extension (B) n'est pas accessible ou si le produit (B) ne peut pas utiliser la réception d'appel en P2P.|
